# EUROPEAN PATENT SPECIFICATION

(11) **EP 2 027 999 B1**
(45) Date of publication and mention of the grant of the patent: **11.07.2012**
(21) Application number: 07014899.4
(22) Date of filing: 30.07.2007
(51) Int. Cl.: B32B 27/32

(54) **Heat-shrinkable film and its use for beverage bundles**
Wärmeschrumpfbare Folie und ihre Verwendung für Getränkebündel
Film thermorétrécissable et ses utilisations pour des groupes de boissons

(43) Date of publication of application: 25.02.2009
(73) Proprietor: Euzone Consulting & Services Ltd, Small Heath Birmingham B10 0TH (GB)
(72) Inventor: Volpi, Donato, Tortoreto Lido (TE) (IT)
(74) Representative: Alagem Modiano, Lara S.

(56) References cited:
- EP-A- 1 225 201
- WO-A-01/10643
- WO-A-2004/011517
- WO-A-2006/037603
- ANONYMOUS: "Borstar LLDPE for collation shrink films"[Online] 2004, pages 1-2, XP002456905 Kongens Lyngby, Denmark Retrieved from the Internet: URL:http://www.borealisgroup.com/pdf/liter ature/borealis/product-news/PNNo34GBFF.pdf > [retrieved on 2007-07-29]
- ANONYMOUS: "Borstar PE for blown film applications"[Online] May 2007 (2007-05), pages 1-34, XP002456904 Vienna Retrieved from the Internet: URL:http://www.borouge.com/public/pdf/IN00 52.pdf> [retrieved on 2007-10-29]

## Description

The present invention relates to a low-thickness heat-shrinkable polyethylene film which can be used to package bundles of containers of beverages or other liquids, weighing from 4.5 to 14.5 kg, to the use of the film in preparing the bundles, and to the bundles obtained by using said film.

Heat-shrinkable polyethylene films used up to now for the packaging of beverage bundles have a thickness of no less than 50 µm, generally ranging from 60 to 80 µm.

These are single- and three-layer films, the base of which is constituted by low-density polyethylene (LDPE). The other components normally introduced in the mixture are medium- and high-density polyethylenes, metallocene linear polyethylenes, and additives (slipping, antiblocking, antistatic and process agents).

Three-layer films are also known in which the central layer is constituted by bimodal LLDPE and the adjacent layers are constituted by LDPE.

By way of example, in the case of a film whose central layer is formed by LDPE with the addition of LLDPE, the density of the LDPE polyethylene is 0.928-931 g/cm³, the MFI is 0.3 g/10' (190 °C, 2.16 kg), the density of the LLDPE is 0.925 g/cm³ and the MFI is 0.75 g/10'.

In the case of a film whose central layer is formed by bimodal LLDPE, the density of the LLDPE is 0.931 g/cm³, with an MFI of 0.7 g/10'; the density of the LDPE of the outer layers is 0.927 g/cm³ and the MFI is 0.7 g/10'.

As already noted, the thickness of these films is not lower than 50 µm. Already at 50 µm, the film whose central layer is formed by bimodal LLDPE has problems during oven treatment for heat-shrinking and during film cutting.

The document "Borstar LLDPE for collation shrink films" (htnp://www.boreaIisgroup.com/pdCTiterature/borealis/product-news/PNNo 34GBPP.pdf), the application WO 2006/037603 and the document "Borstar PE for blown film applications" (http://www.borouge.com/public/pdf/IN0052.pdf) disclose films whose central layer is formed of bimodal LLDPE and the outer layers are formed of LDPE ("Borstar LLDPE for collation shrink firms") and LLDPE added with LDPE in an amount not greater than 50% by weight (WO 2006/037603 and "Borstar PE for blown film applications"), wherein the film of "Borstar LLDPE for collation shrink films" is heat-shrinkable, but not sufficiently stiff and the films of WO 2006/037603 and "Borstar PE for blown film applications" are not heat-shrinkable.

The consumption of bottled beverages, particularly mineral water in PET bottles, is increasing rapidly, with a consequent increase in the use of films obtained from a petroleum-derived polymer (polyethylene).

In view of this and of other aspects, the need is felt to have a low-thickness heat-shrinkable three-layer polyethylene film in order to reduce both the use of a petroleum-derived polymer and the energy consumption required to extrude the film for an equal number of square meters produced as well as the transport costs for an equal number of square meters transported, the space reserved for film storage, and finally the costs for disposal of the film after use.

This aim and these and other objects are achieved with the film according to the present invention.

It has now been found unexpectedly that it is possible to reduce the thickness of a heat-shrinkable three-layer polyethylene film usable for bundles of beverages or other liquids which weigh from 4.5 to 14.5 kg, to values which are lower than 50 µm and can reach 35 µm (equal to approximately 60% of the thickness of the 60-µm film that has been used up to now) if the central layer of the film is formed by bimodal LLDPE in which the ratio between MFI (190 °C, 21.6 kg) and MFI (190 °C, 5 kg) ranges from 20 to 30, preferably 22-25, the density is 0.920-0.935 g/cm³, preferably 0.930-0.935 g/cm³, and the outer layers, which are mutually identical or different, are formed by LDPE with a density of 0.920-0.930 g/cm³, MFI (190 °C, 2.16 kg) 0.2-0.5 g/10', with the addition of 3-10%, preferably 5% by weight, of LLDPE with a density of 0.920-0.935 g/cm³, MFI (190 °C, 2.16 kg) from 0.3 to 0.8 g/10', preferably 0.7-0.75 g/10'.

The outer layers comprise antiblocking, process and antistatic additives of the type that is normally used.

Examples of these additives are the Ampacet ® 100552-A antistatic additive, the Ampacet ® 102025 antiblocking additive, and the Ampacet ® 102232PA process additive, manufactured by AMPACET BELGIUM SPRL. An example of a bimodal LLDPE which can be used is Borstar ® FB2310, marketed by Borealis A/S, Denmark (Borstar is a registered trademark of Borealis).

LDPE and LLDPE polyethylenes are polymers which are described extensively in the literature. LLDPE polyethylene is an ethylene copolymer with smaller proportions of an alpha olefin, preferably butene-1 (0.5 to 20% in moles).

In the new film, the thickness of the outer layers is 15-33% of the total thickness for each layer and 33-70% for the central layer.

The bundles are prepared according to known procedures which comprise the following steps:
- the start of a new reel of film is loaded, splicing it to the preceding one so that it is not necessary to thread the machine again;
- the film is unwound and fed onto a conveyor;
- the film is cut to size;
- the film is inserted below the group of bottles (2-, 3-, 4-, 6-, 8-, 12-unit bundles);
- a wrapping bar lifts the trailing end of the film and starts to wrap it around the bottles;
- the bar completes the wrapping of the film around the bottles;
- the bundle enters the oven which heat-shrinks the film and bonds its leading and trailing edges, which are placed in contact, under the bundle, by the wrapping bar;
- a handle can be applied or not to the bundle.

The temperature in the heat-shrinkable oven ranges generally from 170 to 230 °C, with a longitudinal heat-shrinking of approximately 15-20% and a transverse heat-shrinking of approximately 70%. With the new film, the temperature of the oven is normally lowered by 20-30 °C, while longitudinal heat-shrinking drops to approximately 10% and transverse heat-shrinking rises to 80%.

The film according to the invention is prepared by using the process of bubble coextrusion, in which, as is known, the polymeric material to be coextruded, which arrives from a plurality of a number of extruders, enters with separate streams an extrusion head which is provided with an annular extrusion plate whose diameter is suitable for the film to be provided. The head is designed to distribute the various streams and laminate them through the extrusion plate.

The head is of the type with three separate domes, provided with radial holes arranged in a helical spiral, in which the separate streams that enter from the ducts that arrive from the extruders are distributed uniformly, entering the holes of the spiral channels; the polymer fills the channels and is pushed radially and circumferentially, distributing itself uniformly through the circumference.

The layers then meet at the base of the extrusion plate, from which they are extruded in tubular form.

Cold air is used to cool the tubular element at the output of the extrusion plate.

Preferably, in order to achieve higher productivity of the plant, the internal surface of the tubular element is also cooled and the hot air inside the bubble is extracted.

The intensity of the cooling is selected in relation to the linear speed of the extruded element, to the extrusion temperature, to the thickness of the film and to the distance between the extrusion head and the traction rollers.

The material that exits from the extrusion plate is brought to the selected size by introducing air.

The tubular element is drawn upwardly by the stretching assembly, constituted by two cylinders, one made of steel and one lined with rubber, which determine the final thickness of the film by means of the value of the drawing speed.

The distance between the extrusion plate and the stretching assembly is fixed and such that the tubular element, flattened and drawn by the traction rollers, maintains a residual temperature of no more than approximately 45°C; this is done to avoid the sticking of the inner walls of the tubular element or the subsequent packing of the turns of film wound in a reel.

After stretching, the material is guided by means of rollers to the wrapping station, arranged at ground level, where the tubular element as is or the simple film obtained by cutting the tubular element is placed on a reel.

The film has high-level mechanical features, which surprisingly are even better than those of the thicker three-layer film obtained from the same mixtures.

Differently from films in which the central layer is similar to the central layer of the film according to the invention (the outer layers, however, are different), the new film does not suffer the problems observed with known films during the heat-shrinking step, or other problems.

The following example is given by way of non-limiting illustration of the present invention.

### EXAMPLE

A three-layer film with a thickness of 60, 50, 40 and 35 µm, in which the mutually identical outer layers A and C and the central layer B are obtained from mixtures which have the composition indicated below, fed to the single-screw variable-pitch extruders A, B and C, is prepared by using the bubble coextrusion technique, working in the conditions shown in Table 1. Table 2 lists the mechanical characteristics of the resulting films.

### Mixtures which form the layers A and C (% by weight of the components) (each layer being 27.5% of total thickness)

| | |
|---|---|
| LDPE | 91.6% (MFI 0.3 g/10', d = 0.928 g/cm³) |
| LLDPE Basell 25 GFA | 5% (MFI 0.75 g/10', d = 0.9255 g/cm³) |
| Ampacet 100552A antistatic agent | 1.4% |
| Ampacet 102025 antiblocking agent | 1.0% |
| Ampacet 102232PA process additive | 1.0% |

### Mixtures forming layers B (% by weight) (45% of total thickness)

| | |
|---|---|
| LLDPE Borstar FB2310 (Borealis) | |
| MFI 0.2/10', d = 0.2, d = 0.931 g/cm³ | 99.2% |
| Ampacet 10090 slip additive | 0.8% |

**Table 1**

| Process parameters | | Average film thickness (µm) | | | |
|---|---|---|---|---|---|
| | | 60 | 45 | 40 | 35 |
| Extrusion plate diameter | mm | 450 | 450 | 450 | 450 |
| Extrusion plate gap | mm | 1.2 | 1.2 | 1.2 | 1.2 |
| Raw production band | mm | 1510 | 1480 | 1480 | 1480 |
| Stretching speed | m/min | 28.8 | 37.5 | 40.9 | 46.7 |
| Productivity | kg/h | 300 | 275 | 270 | 270 |
| Wrapping calender tension | kg | 14.0 | 16.0 | 16.0 | 16.0 |
| Wrapping unit tension | kg | 5.0 | 7.5 | 7.5 | 7.5 |
| Screw feeder turns | rpm | | | | |
| Layer A | | 119.3 | 92.8 | 90.9 | 91.4 |
| Layer B | | 36.3 | 38.7 | 38.9 | 38.1 |
| Layer C | | 122.3 | 77.2 | 76.9 | 76.0 |
| Melting point | °C | | | | |
| Layer A | | 237 | 238 | 237 | 237 |
| Layer B | | 222 | 244 | 243 | 244 |
| Layer C | | 230 | 222 | 224 | 222 |
| Cylinder temperature | °C | | | | |
| Extruder A | | 190/210 | 205/210 | 205/210 | 205/210 |
| Extruder B | | 190/215 | 215/230 | 215/230 | 215/230 |
| Extruder C | | 185/210 | 205/210 | 205/210 | 205/210 |
| Head temperature | °C | 210/211 | 210/212 | 210/212 | 210/212 |
| Cooling ring temperature | °C | 14 | 14 | 14 | 14 |
| IBC insertion temperature* | °C | 18 | 16 | 15 | 15 |
| IBC extraction temperature* | °C | 72 | 74 | 72 | 72 |

| | | | | | |
|---|---|---|---|---|---|
| IBC*= Internal Bubble Cooling | | | | | |

The 60-µm film is not according to the invention.

**Table 2**

| Mechanical properties | Unit | Average film thickness (µm) | | | |
|---|---|---|---|---|---|
| | | 60 | 45 | 40 | 35 |
| Longitudinal yield strength | MPa | 9 | 8 | 8 | 10 |
| Transverse yield strength | MPa | 11 | 11 | 9 | 10 |
| Longitudinal ultimate tensile | MPa | 26 | 30 | 33 | 36 |
| strength | | | | | |
| Transverse ultimate tensile | MPa | 20 | 21 | 21 | 20 |
| strength | | | | | |
| Longitudinal breaking | % | 600 | 440 | 400 | 380 |
| elongation | | | | | |
| Transverse breaking | % | 850 | 820 | 750 | 740 |
| elongation | | | | | |
| Longitudinal Young modulus | N/mm² | 360 | 400 | 400 | 440 |
| Transverse Young modulus | N/mm² | 540 | 520 | 520 | 650 |

## Claims

1. A heat-shrinkable three-layer polyethylene film usable for packaging bundles of containers of beverages or other liquids, having a thickness of less than 50 µm and down to 35 µm, in which the central layer comprises bimodal low-density linear polyethylene (LLDPE) which has a ratio between melt flow index (MFI) at 190 °C, 21.6 kg and MFI at 190 °C, 5 kg comprised in the range from 20 to 30, and a density of 0.920-0.935 g/cm³, and wherein the outer layers of the film that are adjacent to the central layer are formed by low-density polyethylene (LDPE) with a density of 0.920-0.930 g/cm³ and an MFI (190 °C, 2.16 kg) from 0.2 to 0.5 g/10', with the addition of 3-10% by weight of LLDPE with a density of 0.920-0.930 g/cm³ and an MFI (190 °C, 2.16 kg) from 0.3 to 0.8 g/10'.

2. The film according to claim 1, wherein the ratio between the MFI values of the bimodal LLDPE is 22-25 and the MFI (190 °C, 2.16 kg) of the bimodal LLDPE is 0.2 g/10'.

3. The film according to claim 1, wherein the MFI of LLDPE is 0.7-0.75 g/10'.

4. The film according to each of claims 1 to 3, having a thickness from 45 to 35 µm.

5. A heat-shrinkable three-layer polyethylene film according to each of claims I to 4 , in which the longitudinal ultimate tensile strength is 30-36 MPa, the longitudinal Young modulus is 400-450 N/mm², and the transverse Young modulus is 520-650 N/mm².

6. Use of the film according to each of claims 1 to 5 in the packaging of bundles of bottles of beverages weighing from 4.5 to 14.5 kg.

7. Beverage bundles weighing from 4.5 to 14.5 kg, wherein the packaging film is a film according to each of claims 1 to 5.

## Patentansprüche

1. Ein wärmeschrumpfbarer Polyethylenfilm aus drei Schichten, verwendbar zur Verpackung von Bündeln von Behältern für Getränke oder andere Flüssigkeiten, der eine Dicke von weniger als 50 µm und bis zu 35 µm hat, worin die zentrale Schicht bimodales lineares Polyethylen niedriger Dichte (low-density linear polyethylene, LLDPE) umfasst, das ein Verhältnis zwischen Schmelzindex (melt flow index, MFI) bei 190°C, 21,6 kg, und MFI bei 190°C, 5 kg, hat, das im Bereich von 20 bis 30 liegt, und eine Dichte von 0,920-0,935 g/cm³, und worin die äußeren Schichten des Films, die an die zentrale Schicht angrenzen, von Polyethylen niedriger Dichte (low-density polyethylene, LDPE) mit einer Dichte von 0,920-0,930g/cm³ und einem MFI (190°C, 2,16 kg) von 0,2 bis 0,5 g/10' gebildet werden, mit Hinzugabe von 3-10 Gewichtsprozent LLDPE mit einer Dichte von 0,920-0,930g/cm³ und einem MFI (190°C, 2,16 kg) von 0,3 bis 0,8 g/10'.

2. Der Film gemäß Anspruch 1, worin das Verhältnis zwischen den MFI-Werten des bimodalen LLDPE 22-25 beträgt und der MFI (190°C, 2,16 kg) des bimodalen LLDPE 0,2 g/10' beträgt.

3. Der Film gemäß Anspruch 1, worin der MFI von LLDPE 0,7-0,75 g/10' beträgt.

4. Der Film gemäß jedem der Ansprüche 1 bis 3, der eine Dicke von 45 bis 35 µm hat.

5. Ein wärmeschrumpfbarer dreischichtiger Polyethylenfilm gemäß jedem der Ansprüche 1 bis 4, worin die Reißfestigkeit in Längsrichtung 30-36 MPa beträgt, der Youngsche Modul in Längsrichtung 400-450 N/mm² beträgt und der transversale Youngsche Modul 520-650 N/mm² beträgt.

6. Verwendung des Films gemäß jedem der Ansprüche 1 bis 5 in der Verpackung von Bündeln von Getränkeflaschen, die von 4,5 bis 14,5 kg wiegen.

7. Getränkebündel, die von 4,5 bis 14,5 kg wiegen, wobei der Verpackungsfilm ein Film gemäß jedem der Ansprüche 1 bis 5 ist.

## Revendications

1. Film de polyéthylène thermorétractable à trois couches utilisable pour emballer des packs de récipients de boissons ou autres liquides, ayant une épaisseur inférieure à 50 µm et supérieure à 35 µm, dans lequel la couche centrale comprend un polyéthylène à basse densité linéaire (PEBDL) bimodal qui a un rapport entre l'indice de fluage (IF) à 190 °C, 21,6 kg et l'IF à 190 °C, 5 kg compris dans la plage de 20 à 30, et une masse volumique de 0,920 à 0,935 g/cm³, et dans lequel les couches externes du film qui sont adjacentes à la couche centrale sont constituées d'un polyéthylène basse densité (PEBD) ayant une masse volumique de 0,920 à 0,930 g/cm³ et un IF (190 °C, 2,16 kg) de 0,2 à 0,5 g/10', avec l'addition de 3 à 10 % en poids de PEBDL ayant une masse volumique de 0,920 à 0,930 g/cm³ et un IF (190 °C, 2,16 kg) de 0,3 à 0,8 g/10'.

2. Film selon la revendication 1, dans lequel le rapport entre les valeurs de l'IF du PEBDL bimodal est de 22 à 25 et l'IF (190 °C, 2,16 kg) du PEBDL bimodal est de 0,2 g/10'.

3. Film selon la revendication 1, dans lequel l'IF du PEBDL est de 0,7 à 0,75 g/10'.

4. Film selon l'une quelconque des revendications 1 à 3, ayant une épaisseur de 45 à 35 µm.

5. Film de polyéthylène thermorétractable à trois couches selon l'une quelconque des revendications 1 à 4, dans lequel la résistance à la traction longitudinale est de 30 à 36 MPa, le module de Young longitudinal est de 400 à 450 N/mm², et le module de Young transversal est de 520 à 650 N/mm²,

6. Utilisation du film selon l'une quelconque des revendications 1 à 5 dans l'emballage de packs de bouteilles de boissons pesant de 4,5 à 14,5 kg.

7. Packs de boissons pesant de 4,5 à 14,5 kg, dans lesquels le film d'emballage est un film selon l'une quelconque des revendications 1 à 5.
